# EUROPEAN PATENT SPECIFICATION

(11) **EP 4 303 067 B1**
(45) Date of publication and mention of the grant of the patent: **07.10.2026**
(21) Application number: 23159245.2
(22) Date of filing: 28.02.2023
(51) Int. Cl.: B60L 53/14, B60L 53/22, B60L 53/24, B60L 58/12, B60L 53/10, B60L 53/57

(54) **PLUG-IN HYBRID VEHICLE V2V DIRECT CURRENT CHARGING SYSTEM AND CONTROL METHOD**
V2V-GLEICHSTROMLADESYSTEM FÜR EIN PLUG-IN-HYBRIDFAHRZEUG UND STEUERUNGSVERFAHREN
SYSTÈME DE CHARGE EN COURANT CONTINU V2V DE VÉHICULE HYBRIDE ENFICHABLE ET PROCÉDÉ DE COMMANDE

(30) Priority: 24.06.2022 CN 202210721494
(43) Date of publication of application: 10.01.2024
(73) Proprietor: Deepal Automobile Technology Co., Ltd., Chongqing 401133 (CN)
(72) Inventor: KONG, Quan, Chongqing, 401133 (CN); CHEN, Dong, Chongqing, 401133 (CN); GAO, Bo, Chongqing, 401133 (CN)
(74) Representative: 2K Patent Partnerschaft mbB

(56) References cited:
- EP-A1- 3 014 730
- EP-B1- 3 014 730
- CN-A- 113 381 461

## Description

### TECHNICAL FIELD

The disclosure belongs to a technical field of discharge outside vehicle, in particular to a plug-in hybrid vehicle V2V DC charging system and a control method.

### BACKGROUND

With the worsening of the global energy crisis, the national policy support for the development of new energy vehicles, and the development of the new energy vehicle market for many years, new energy vehicles have become more and more popular, accounting for an increasing proportion of the national motor vehicle population. By the end of 2021, the number of new energy vehicles reached 7.84 million in China. The public's awareness and acceptance of new energy vehicles continues to increase. According to surveys, driving range and charging convenience are still the primary considerations for most consumers when purchasing new energy vehicles.

However, limited by the limitations of current power battery technology, the driving range of new energy vehicles still cannot achieve a qualitative breakthrough; although the country has increased the construction of charging infrastructure in recent years, it is still not as convenient as fuel vehicles, and even many areas have zero coverage of charging infrastructure.

Based on these factors, there is an urgent need to design a charging method that is convenient for road rescue, so that consumers can get emergency power when the battery is exhausted but there are no charging facilities around, so as to ensure that they can drive to a safe or convenient charging area.

EP 3014730 A1 discloses that the V to V function requires a dedicated connection plug. When the power system determines that the charge connection signal (i.e. CC signal) is effective and the connection plug is a dedicated charge plug for the V to V function by detecting a level of the connection plug, the power system is prepared for an instruction from the dashboard. For example, assuming vehicle A charges vehicle B, the vehicle A is set in a discharging state, i.e. the vehicle A is set to perform the off-grid on-load function. The control module in vehicle A sends the message indicating the charge connection is normal and the charge is prepared to the battery manager 103. EP 3014730 A1 takes one of the vehicle as charging pile, which needs both the charging vehicle and the discharging vehicle work on the power-on state, and lack of active wake-up function.

CN 113381461 A discloses to identify the connection confirmation signal voltage at the DC charging interface; when the connection confirmation signal voltage is a preset voltage, detect the discharge switch signal; when the discharge switch signal is detected as the first state information, control the first switch unit to be in a disconnected state and the second switch unit to be in a closed state, and send the first DC vehicle to vehicle charging command to the battery management system BMS. Connect the second switch unit to the connection line of the DC charging interface, and the power battery can charge the charged vehicle connected to the DC charging interface. CN113381461A depends on the switches to control the state of the charging interface.

### SUMMARY

The above problems are solved by a plug-in hybrid electric vehicle V2V DC charging system according to claim 1. Advantageous embodiments are the subject of the dependent claims. A such system can charge the charging vehicle directly through the generator of the original vehicle using fuel, without using power of a power battery, and without using an on-board charger with reverse output, to achieve remote reinforcement work and improve conversion efficiency.

The invention provides a plug-in hybrid electric vehicle V2V DC charging system. The system includes: a charging connection device, a discharging vehicle and a charging vehicle;
the charging connection device is configured to connect the discharging vehicle and the charging vehicle and wake up the discharging vehicle first, so that the discharging vehicle completes a high-voltage power-on;
the discharging vehicle is configured to send a maximum output capability of the discharging vehicle signal and a discharge ready signal to the charging connection device through CAN communication;
the charging connection device is configured to wake up the charging vehicle based on the discharge ready signal, so that the charging vehicle completes a high-voltage power-on;
the charging connection device is configured to simulate a charging pile to perform charging handshake and charging parameter configuration with the charging vehicle according to a preset standard;
after the charging vehicle is ready, the discharging vehicle is configured to provide power through an engine to drive a generator to generate electricity to charge a power battery of the charging vehicle.

Furthermore, the discharging vehicle is equipped with the engine, the generator, a first vehicle controller, an inverter, a DC charging port A, a first battery management system and a first power battery;
the charging vehicle is equipped with a second vehicle controller, a DC charging port B, a second battery management system and a second power battery;
the inverter and the first power battery are connected through a first main relay, and the DC charging port A is connected with the inverter and the first main relay through a first fast charging relay;
the DC charging port B is connected to a second main relay through a second fast charging relay;
the charging connection device comprises a discharging gun head for connecting the DC charging port A of the discharging vehicle, a charging gun head for connecting the DC charging port B of the charging vehicle, a high voltage cable and a low voltage cable for connecting the DC charging port A and the DC charging port B, a power supply module to provide low-voltage auxiliary power supply for charging vehicle and discharging vehicle, and a charging connection control module configured to detect connection status of a charging gun and a discharging gun, collect temperatures of charging gun head and discharging gun head, and control electronic locks of the charging vehicle and discharging vehicle to be unlocked or locked.

According to an embodiment of the disclosure, a resistance value of a CC2 resistor configured in the discharging gun head is different from a resistance value of a CC2 resistor specified in the preset standard, and a resistance value of a CC2 resistor configured in the charging gun head is equal to the resistance value of the CC2 resistor specified in the preset standard.

According to an embodiment of the disclosure, after being awakened by the charging connection device, the first vehicle controller of the discharging vehicle controls the first battery management system to detect the CC2 resistance, if the discharging vehicle is determined to have the discharging requirement and to be fully connected with the discharging gun head according to the detected CC2 resistance, the first vehicle controller of the discharging vehicle controls the discharging vehicle to complete the high-voltage power-on;
after the discharging vehicle is powered on at high voltage, the first vehicle controller controls the generator to drive the engine to start through the energy of the first power battery; after the engine starts, the first vehicle controller controls the generator to use the energy of the engine to generate electricity, a target voltage of the generator is a preset voltage greater than a total voltage of the first power battery, and a target power of the generator is a low-voltage power consumption of the discharging vehicle;
after the generator normally generates power, the first vehicle controller controls the first main relay connected to the first power battery to disconnect; then the first battery management system determines whether a state of the discharging vehicle meets a preset discharge condition, and if so, the first battery management system sends the discharge ready signal and sends the maximum output capacity of the discharging vehicle signal to the charging connection device via a CAN bus;
the charging connection device wakes up the charging vehicle based on the discharge ready signal, and simulates the charging pile to perform charging handshake and charging parameter configuration with the charging vehicle;
the charging connection device sends a detected DC voltage of the charging terminal to the first battery management system through the CAN bus, and the first battery management system forwards the detected DC voltage to the first vehicle controller, and the first vehicle controller adjusts the target voltage of the generator to be the detected DC voltage of the charging terminal;
when an absolute value of a voltage difference between an actual bus of the charging connection device at the discharging vehicle and an actual bus of the charging connection device at the charging vehicle is within a preset range through comparison by the charging connection device, the charging connection device controls the charging relay to be closed, and the discharging vehicle starts to charge the charging vehicle;
during the charging process, the charging connection device sends a received charging demand to the first battery management system through the CAN bus in real time, and the first battery management system forwards the charging demand to the first vehicle controller, so that the first vehicle controller adjusts an output current and an output voltage of the generator according to the charging demand.

According to an embodiment of the disclosure, the charging connection control device wakes up the charging vehicle based on the discharge ready signal, and at the same time, locks the electronic locks of the charging gun head and the discharging gun head, and simulates the charging pile to start charging handshake with the second battery management system of the charging vehicle;
after the second battery management system of the charging vehicle is woken up, the second battery management system detects the CC2 resistance; If charging vehicle is determined to have a charging demand and to be fully connected to the charging gun head according to the detected CC2 resistance, the second vehicle controller of the charging vehicle controls the discharging vehicle to complete high-voltage power-on;
after completing the charging handshake and high-voltage power-on, the second battery management system sends a maximum allowable charging capacity of the second power battery to the charging connection device according to the preset standard, and the charging connection device simulates the charging pile to send the maximum output capacity of the discharging vehicle to the second battery management system;
after the second battery management system matches the received maximum output capacity of the discharging vehicle with a state of the second battery management system, the second battery management system controls the second fast charging relay to close and then sends a charging ready signal to the charging connection device.

According to an embodiment of the disclosure, when the first vehicle controller controls the discharging vehicle to complete the high-voltage power-on, the first main relay is closed and the first fast charging relay is disconnected;
when the second vehicle controller controls the charging vehicle to perform high-voltage power-on, the second main relay is closed, and the second fast charging relay is disconnected.

According to an embodiment of the disclosure, after entering a DC charging state, if the charging is completed, the user actively terminates the charging, or the charging vehicle or discharging vehicle has a fault that requires a termination of charging, the first vehicle controller of the discharging vehicle controls to shut down the generator and other high-voltage loads of the discharging vehicle, and then controls the first fast charging relay to disconnect after the generator stops;
after the charging vehicle determines that a charging current is lower than a preset value, the second battery management system controls the second fast charging relay to disconnect;
after the charging connection device confirms that the charging relay is disconnected, the charging connection device controls the electronic locks of the charging gun and the discharging gun to be unlocked, and stops providing low-voltage auxiliary power supply to the charging vehicle and discharging vehicle, and the charging vehicle and discharging vehicle complete power-off and sleep respectively.

The disclosure also provide a plug-in hybrid electric vehicle V2V DC charging control method. The method is according to the system above and includes
a first vehicle controller of a discharging vehicle, after being awakened by a charging connection device, controlling a first battery management system to detect a CC2 resistance, if the detected CC2 resistance determines that the discharging vehicle has a discharge demand and is fully connected to a discharging gun head, the first vehicle controller of the discharging vehicle controls the discharging vehicle to complete high-voltage power-on;
the first vehicle controller, after the discharging vehicle being powered on at high voltage, controlling a generator to drive an engine to start through an energy of a first power battery; after the engine starts, the first vehicle controller controlling the generator to use the energy of the engine to generate electricity, and a target voltage of the generator is a preset voltage greater than a total voltage of the first power battery, and a target power of the generator is a low-voltage power consumption of the discharging vehicle;
after the generator normally generates power, the first vehicle controller controlling a first main relay connected to the first power battery to be disconnected; then the first battery management system determining whether a state of the discharging vehicle meets a preset discharge condition, and if so, the first battery management system sends a discharge ready signal and sends a maximum output capacity of the discharging vehicle signal to the charging connection device via a CAN bus;
the charging connection device waking up a charging vehicle based on the discharge ready signal, and simulates a charging pile to perform charging handshake and charging parameter configuration with the charging vehicle;
the charging connection control device waking up the charging vehicle based on the discharge ready signal, and at the same time, locking the electronic locks of the charging gun head and the discharging gun head, and simulating the charging pile to start charging handshake with a second battery management system of the charging vehicle;
after the second battery management system of the charging vehicle is woken up, the second battery management system detecting a CC2 resistance; If charging vehicle is determined to have a charging demand and to be fully connected to the charging gun head according to the detected CC2 resistance, the second vehicle controller of the charging vehicle controls the discharging vehicle to complete high-voltage power-on;
after completing the charging handshake and high-voltage power-on, the second battery management system sending a maximum allowable charging capacity of a second power battery to the charging connection device according to the preset standard, and the charging connection device simulating the charging pile to send the maximum output capacity of the discharging vehicle to the second battery management system;
after the second battery management system matches the received maximum output capacity of the discharging vehicle with a state of the second battery management system, the second battery management system controlling the second fast charging relay to close and then sending a charging ready signal to the charging connection device;
the charging connection device sending a detected DC voltage of the charging terminal to the first battery management system through the CAN bus, and the first battery management system forwarding the detected DC voltage to the first vehicle controller, and the first vehicle controller adjusting the target voltage of the generator to be the detected DC voltage of the charging terminal;
when an absolute value of a voltage difference between an actual bus of the charging connection device at the discharging vehicle and an actual bus of the charging connection device at the charging vehicle is within a preset range through comparison by the charging connection device, the charging connection device controlling the charging relay to be closed, and the discharging vehicle starting to charge the charging vehicle;
during the charging process, the charging connection device sending a received charging demand to the first battery management system through the CAN bus in real time, and the first battery management system forwarding the charging demand to the first vehicle controller, so that the first vehicle controller adjusts an output current and an output voltage of the generator according to the charging demand.

The communication messages between the discharging vehicle and the charging connection device are exchanged through the custom standard CAN, while the communication between the charging connection device and the charging vehicle adopts "GB/T 20234.3-2015 Electric Vehicle Conductive Charging Connection Device, Part 3: DC charging interface", the charging handshake message is also implemented by "GB/T 27930-2015 Communication protocol between off-board conductive charger and battery management system for electric vehicles", so that for discharging vehicles , when it is discharging externally and being fast-charged by the charging pile, the messages sent will not be repeated, realizing external charging and being charged of the discharging vehicle, greatly reducing development costs and enhancing versatility. This can charge the charging vehicle directly through the generator of the original vehicle using fuel, without using power of a power battery, and without using an on-board charger with reverse output, to achieve remote reinforcement work and improve conversion efficiency.

### BRIEF DESCRIPTION OF THE DRAWINGS

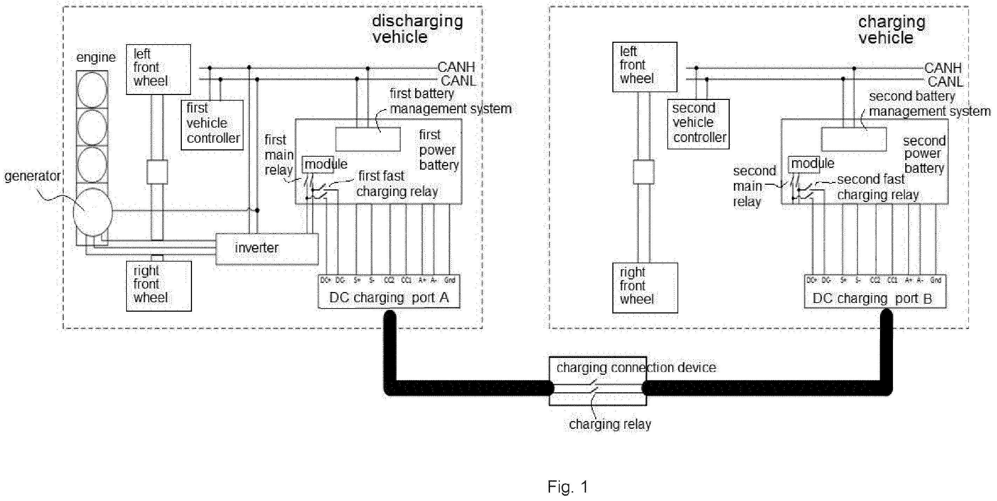

FIG. 1 is a schematic diagram of an architecture of a plug-in hybrid vehicle V2V DC charging system of a disclosure.

### DETAILED DESCRIPTION

The disclosure will be further described below in conjunction with figure.

Please refer to FIG. 1. The disclosure provides a plug-in hybrid vehicle DC charging system. The system includes a discharging vehicle, a charging connection device and a charging vehicle.

The discharging vehicle includes: an engine, a generator, a first vehicle controller, an inverter, a DC charging port A, a first battery management system and a first power battery.

After the vehicle recognizes that the charging connection device has been connected, the first power battery provides energy to start the engine after the vehicle is powered on at high voltage. The first power battery is connected to the inverter through the first main relay, and the first main relay is connected to the inverter through the DC charging port A and the first fast charging relay.

The first battery management system is configured to identify the connection status of the charging connection device between the discharging vehicle and the discharging gun head of the charging connection device, and cooperate with the instruction of the first vehicle controller to complete the on-off of the first main relay and the first fast charging relay. At the same time, the first battery management system is also configured to monitor and feed back the status of the first power battery.

The generator monitors and feeds back the status and power generation capacity of the generator itself, and generates power according to the instructions of the first vehicle controller. The generator is connected between the engine and the inverter, and the generator has a generating state or a driving state. When the generator is in the driving state, a direct current provided by the first power battery is rectified by the inverter to become alternating current, in order to supply power to the generator to start the engine; when the generator is in the generating state, the generator is driven by the power of the engine to generate electricity which is then inverted into DC through the inverter, and then outputs the DC to the DC charging port A through the fast charging relay or provides DC to charge the power battery through the main relay.

The first vehicle controller coordinates the high-voltage power-on and power-off process of the discharging vehicle, controls the engine and generator according to the charging demand of the charging vehicle, feeds back its own discharging capacity according to the state of the discharging vehicle, and control indicator light to be lighted up according to the charging state. When the charging connection device is in the connected state, the entire vehicle is controlled to exit the drivable mode, so as to prevent the entire vehicle from being able to drive.

The engine monitors and feeds back the status and capabilities of the engine itself, and works according to the instructions of the first vehicle controller.

The charging connection device monitors and feedbacks its own status and capabilities. When it is recognized that both ends of the charging connection device are connected to the discharging vehicle and the charging vehicle, the discharging vehicle is woken up, and according to "GB/T 27930-2015 Communication Protocol between Off-board Conductive Charger and Battery Management System of Electric Vehicles" , the charging connection device completes the DC charging handshake process with the charging vehicle, and forwards the charging demand of the charging vehicle to the discharging vehicle. A "Start/Stop" switch can be provided on the charging connection device to manually turn on or off the discharge function.

The discharging vehicle includes: a second vehicle controller, a second power battery, a second battery management system and a DC charging port B.

The second vehicle controller coordinates the high-voltage power-on and power-off process of the charging vehicle, and feeds back the power used by other loads. When the charging connection device is in the connected state, the entire vehicle is controlled to exit the drivable mode, so as to prevent the entire vehicle from being able to drive.

The second power battery stores charging power.

The second battery management system is configured to identify the connection status of the charging connection device and the charging vehicle, and cooperate with the second vehicle controller to complete the on-off of the second main relay and the second fast charging relay, monitor and feedback the status of the second power battery, and feed back the status of the charging vehicle. According to the "GB/T 27930-2015 Communication Protocol between Off-board Conductive Charger and Battery Management System for Electric Vehicles", the second battery management system completes the DC charging handshake process with the charging connection device.

The invention provides a control method for a V2V DC charging system of a plug-in hybrid vehicle. The method includes
S1, connecting the discharging gun head and the charging gun head of the charging connection device to the DC charging port of the discharging vehicle and the DC charging port of the charging vehicle respectively.
S2, the charging connection device outputs A+ high level to wake up the discharging vehicle, and sends a "start discharging" signal to the first battery management system of the discharging vehicle through CAN communication. The charging connection device needs to monitor its own state, such as temperature, and then calculate a maximum discharge current supported by the charging connection device according to the temperature and feed it back to the first battery management system.
S3, the first battery management system of the discharging vehicle detects the CC2 resistance after receiving the start-discharging signal, and once it recognizes the detected CC2 resistance different from the national standard CC2, it determines that the discharging vehicle has a discharge demand and the discharging gun head establishes a reliable connection to the charging connection device, and sends the "DC V2V discharge" mode to the first vehicle controller, and the first vehicle controller controls the discharging vehicle to complete high-voltage power-on.

The first vehicle controller determines whether the vehicle status (such as fuel volume, fault, etc.) of the discharging vehicle meets the preset discharge conditions after confirming that the discharging vehicle has completed the high-voltage power-on, and sends a vehicle discharge permission flag, "not allowed", to the first battery management system if it does not meet the preset discharge conditions. If the preset discharge conditions are met, the energy of the first power battery is transmitted to the inverter through the first main relay for inversion and then supplies power to the generator, so that the generator drives the engine to start up.

After the engine is successfully started, the first vehicle controller controls the generator to switch to the power generation gear. The target voltage of the generator is a preset value that is a little higher than the total voltage of the first power battery (such as the target voltage=the total voltage of the first power battery + 10V), the generating power of the generator is the low-voltage consumption power of the discharging vehicle. After the generator is generating electricity normally (that is, the generating voltage of the first generator reaches the target voltage and the generating power reaches the low-voltage consumption power), the first vehicle controller controls the first battery management system to disconnect the first main relay.

Afterwards, the battery management system, integrates the maximum working capacity of the engine, generator, charging connection device, and the voltage working range of each high-voltage component of the discharging vehicle, and feeds relevant parameters of the maximum output capacity of the discharging vehicle (such as maximum output voltage, minimum output voltage, maximum output current, minimum output current) and DC discharge status of the discharging vehicle, "discharge ready" signal (allowing to close the charging vehicle), back to the charging connection device through the standard CAN.

S4, the charging connection device receives the signal that the DC discharge state of the first battery management system is "discharge ready", then outputs A+ high level to wake up the charging vehicle; at the same time, locks the electronic locks of the charging gun head and the discharging gun head, and starts to simulate the charging pile to send a CHM handshake message to the charging vehicle, and communicates with the charging vehicle in accordance with the requirements of the DC charging pile in "GB/T 27930-2015".

S5, after the second battery management system of the charging vehicle is woken up, if it recognizes the national standard CC2 resistance, it will send the "DC charging" mode to the second vehicle controller, and the second vehicle controller controls the charging vehicle to complete high-voltage power-on (ie control the charging vehicle to be closed connected with the second main relay), the charging connection device records the maximum allowable charging voltage, maximum allowable charging current, maximum allowable temperature, maximum allowable cell voltage and other protection thresholds of second power battery in the BCP message sent by the second battery management system.

After receiving the BCP message sent by the second battery management system, the charging connection device may send the output capability (maximum output voltage, minimum output voltage, maximum output current, minimum output current) of the discharging vehicle to the second battery management system of the charging vehicle through the CML message. Then the charging connection device judges whether the charging parameters match according to the capacity range of the discharging vehicle and the state of the charging vehicle. If the charging parameters match, the discharge process continues. If the charging parameters do not match, the charging connection device sends "End Discharge" to the first battery management system to end the discharge process.

S6, in step S5, after the charging vehicle to be charged is powered on at high voltage, the charging connection device can collect a DC voltage of the charging terminal, and send it to the first battery management system, and the battery management system forwards it to the first vehicle controller. After the first vehicle controller receives the DC voltage of the charging terminal, it controls the generator to enter the voltage closed-loop control. The target voltage is the DC voltage of the charging terminal, and the power generated is the power consumption of the discharging vehicle at low voltage.

S7, after receiving the BRO=0xAA from the second battery management system, the charging connection device feeds back CRO=0x00 to the second battery management system of the charging vehicle, and the charging connection device judges whether the voltage difference between the current voltage of the battery in the BCP message and the DC voltage of the charging terminal is ≤ ±5%, if yes, the charging connection device determines that the high-voltage bus voltage of the charging connection device reaches within the DC voltage of the charging vehicle±10V for a certain period of time, then controls the charging relay to close, and then send CRO=0xAA to the second battery management system of the charging vehicle and feeds back the status of the charging relay to the discharging vehicle, if not, the discharging process ends.

S8, during the process of charging the charging vehicle, the second battery management system sends the charging demand (charging demand voltage, charging demand current, etc.) to the charging connection device through the BCL message, and the charging connection device sends the current and voltage required by V2V discharge to the first battery management system through the CAN signal, the first battery management system forwards it to the first vehicle controller. The first vehicle controller controls the generator to generate electricity based on the charging demand, and the DC charging system enters the normal charging process.

S9, the DC charging system enters the process of terminating the charging under below situations. When the discharging vehicle is not allowed to discharge (such as disconnection of the charging connection device/failure of the whole vehicle/low fuel level, etc.), the first battery management system sends a DC discharge status as "end discharge" to the charging connection device and the first vehicle controller, so that the charging connection device sends CST. When the charging vehicle is not allowed to charge (such as the charging connection device is disconnected/the vehicle fails/the second power battery is fully charged, etc.), the second battery management system sends a BST message to the charging connection device. When the charging connection device monitors that the DC voltage of the discharging vehicle has reached the maximum output voltage capability of the discharging vehicle, the charging connection device sends a CST message to the second battery management system of the charging vehicle. The CAN communication times out. When the "start/stop" switch on the charging connection device is pressed to send CST, or under other situations. The DC charging system entering the process of terminating the charging includes: the first vehicle controller controls the generator to stop working, and controls the high-voltage power-off of the discharging vehicle; the second vehicle controller controls the high-voltage power-off of the charging vehicle; when the CST message is sent to the second battery management system of the charging vehicle by the charging connecting device and exceeds 100ms or the current is less than 5A, the charging connecting device controls the charging relay to be disconnected and feeds back the state of the charging relay to the second battery management system; after the charging connection device and the charging vehicle have exchanged BSD/CSD statistical messages or after sending CST for more than 10s, charging connection device turns off the A+ output of both charging vehicle and discharging vehicle, unlocks the electronic locks of the charging gun head and the discharging gun head, and then enters the dormant state. After A+ is turned off, the charging vehicle and the discharging vehicle enter the dormant state.

The above descriptions are only embodiments of the present application, enabling those skilled in the art to understand or implement the present application. Various modifications to these embodiments will be readily apparent to those skilled in the art, and the general principles defined herein may be implemented in other embodiments without departing from the scope of the appended claims.

## Claims

1. A plug-in hybrid electric vehicle V2V DC charging system, comprising: a charging connection device, a discharging vehicle and a charging vehicle;
**characterized in that**,
the charging connection device is configured to connect the discharging vehicle and the charging vehicle and wake up the discharging vehicle first, so that the discharging vehicle completes a high-voltage power-on;
the discharging vehicle is configured to send a maximum output capability of the discharging vehicle signal and a discharge ready signal to the charging connection device through CAN communication;
the charging connection device is configured to wake up the charging vehicle based on the discharge ready signal, so that the charging vehicle completes a high-voltage power-on;
the charging connection device is configured to simulate a charging pile to perform charging handshake and charging parameter configuration with the charging vehicle according to a preset standard;
after the charging vehicle is ready, the discharging vehicle is configured to provide power through an engine to drive a generator to generate electricity to charge a power battery of the charging vehicle;
the discharging vehicle is equipped with the engine, the generator, a first vehicle controller, an inverter, a DC charging port A, a first battery management system and a first power battery;
the charging vehicle is equipped with a second vehicle controller, a DC charging port B, a second battery management system and a second power battery;
the inverter and the first power battery are connected through a first main relay, and the DC charging port A is connected with the inverter and the first main relay through a first fast charging relay;
the DC charging port B is connected to a second main relay through a second fast charging relay;
**characterized in that**;
the charging connection device comprises a discharging gun head for connecting the DC charging port A of the discharging vehicle, a charging gun head for connecting the DC charging port B of the charging vehicle, a high voltage cable and a low voltage cable for connecting the DC charging port A and the DC charging port B, a power supply module to provide low-voltage auxiliary power supply for charging vehicle and discharging vehicle, and a charging connection control module configured to detect connection status of a charging gun and a discharging gun, collect temperatures of charging gun head and discharging gun head, and control electronic locks of the charging vehicle and discharging vehicle to be unlocked or locked.

2. The plug-in hybrid electric vehicle V2V DC charging system according to claim 1, wherein,
a resistance value of a CC2 resistor configured in the discharging gun head is different from a resistance value of a CC2 resistor specified in the preset standard, and a resistance value of a CC2 resistor configured in the charging gun head is equal to the resistance value of the CC2 resistor specified in the preset standard.

3. The plug-in hybrid electric vehicle V2V DC charging system according to claim 2, wherein,
after being awakened by the charging connection device, the first vehicle controller of the discharging vehicle controls the first battery management system to detect the CC2 resistance, if the discharging vehicle is determined to have the discharging requirement and to be fully connected with the discharging gun head according to the detected CC2 resistance, the first vehicle controller of the discharging vehicle controls the discharging vehicle to complete the high-voltage power-on;
after the discharging vehicle is powered on at high voltage, the first vehicle controller controls the generator to drive the engine to start by the energy of the first power battery; after the engine starts, the first vehicle controller controls the generator to use the energy of the engine to generate electricity, a target voltage of the generator is a preset voltage greater than a total voltage of the first power battery, and a target power of the generator is a low-voltage power consumption of the discharging vehicle;
after the generator normally generates power, the first vehicle controller controls the first main relay connected to the first power battery to disconnect; then the first battery management system determines whether a state of the discharging vehicle meets a preset discharge condition, and if so, the first battery management system sends the discharge ready signal and sends the maximum output capacity of the discharging vehicle signal to the charging connection device via a CAN bus;
the charging connection device wakes up the charging vehicle based on the discharge ready signal, and simulates the charging pile to perform charging handshake and charging parameter configuration with the charging vehicle;
the charging connection device sends a detected DC voltage of a charging terminal to the first battery management system through the CAN bus, and the first battery management system forwards the detected DC voltage to the first vehicle controller, and the first vehicle controller adjusts the target voltage of the generator to be the detected DC voltage of the charging terminal;
when an absolute value of a voltage difference between an actual bus of the charging connection device at the discharging vehicle and an actual bus of the charging connection device at the charging vehicle is within a preset range through comparison by the charging connection device, the charging connection device controls a charging relay to be closed, and the discharging vehicle starts to charge the charging vehicle;
during the charging process, the charging connection device sends a received charging demand to the first battery management system through the CAN bus in real time, and the first battery management system forwards the charging demand to the first vehicle controller, so that the first vehicle controller adjusts an output current and an output voltage of the generator according to the charging demand.

4. The plug-in hybrid electric vehicle V2V DC charging system according to claim 3, wherein,
the charging connection control device wakes up the charging vehicle based on the discharge ready signal, and at the same time, locks the electronic locks of the charging gun head and the discharging gun head, and simulates the charging pile to start charging handshake with the second battery management system of the charging vehicle;
after the second battery management system of the charging vehicle is woken up, the second battery management system detects the CC2 resistance; If charging vehicle is determined to have a charging demand and to be fully connected to the charging gun head according to the detected CC2 resistance, the second vehicle controller of the charging vehicle controls the discharging vehicle to complete high-voltage power-on;
after completing the charging handshake and high-voltage power-on, the second battery management system sends a maximum allowable charging capacity of the second power battery to the charging connection device according to the preset standard, and the charging connection device simulates the charging pile to send the maximum output capacity of the discharging vehicle to the second battery management system;
after the second battery management system matches the received maximum output capacity of the discharging vehicle with a state of the second battery management system, the second battery management system controls the second fast charging relay to close and then sends a charging ready signal to the charging connection device.

5. The plug-in hybrid electric vehicle V2V DC charging system according to claim 4, wherein,
when the first vehicle controller controls the discharging vehicle to complete the high-voltage power-on, the first main relay is closed and the first fast charging relay is disconnected;
when the second vehicle controller controls the charging vehicle to perform high-voltage power-on, the second main relay is closed, and the second fast charging relay is disconnected.

6. The plug-in hybrid electric vehicle V2V DC charging system according to claim 3, 4 or 5, wherein,
after entering a DC charging state, if the charging is completed, the user actively terminates the charging, or the charging vehicle or discharging vehicle has a fault that requires a termination of charging, the first vehicle controller of the discharging vehicle controls to shut down the generator and other high-voltage loads of the discharging vehicle, and then controls the first fast charging relay to disconnect after the generator stops;
after the charging vehicle determines that a charging current is lower than a preset value, the second battery management system controls the second fast charging relay to disconnect;
after the charging connection device confirms that the charging relay is disconnected, the charging connection device controls the electronic locks of the charging gun and the discharging gun to be unlocked, and stops providing low-voltage auxiliary power supply to the charging vehicle and discharging vehicle, and the charging vehicle and discharging vehicle complete power-off and sleep respectively.

7. A plug-in hybrid electric vehicle V2V DC charging control method according to the system of claim 4, **characterized in that**, comprising:
the first vehicle controller of the discharging vehicle, after being awakened by the charging connection device, controlling the first battery management system to detect a CC2 resistance, if the detected CC2 resistance determines that the discharging vehicle has a discharge demand and is fully connected to the discharging gun head, the first vehicle controller of the discharging vehicle controls the discharging vehicle to complete high-voltage power-on;
the first vehicle controller, after the discharging vehicle being powered on at high voltage, controlling the generator to drive the engine to start through an energy of a first power battery; after the engine starts, the first vehicle controller controlling the generator to use the energy of the engine to generate electricity, and a target voltage of the generator is a preset voltage greater than a total voltage of the first power battery, and a target power of the generator is a low-voltage power consumption of the discharging vehicle;
after the generator normally generates power, the first vehicle controller controlling the first main relay connected to the first power battery to be disconnected; then the first battery management system determining whether a state of the discharging vehicle meets a preset discharge condition, and if so, the first battery management system sends a discharge ready signal and sends a maximum output capacity of the discharging vehicle signal to the charging connection device via a CAN bus;
the charging connection device waking up the charging vehicle based on the discharge ready signal, and simulates the charging pile to perform charging handshake and charging parameter configuration with the charging vehicle;
the charging connection control device waking up the charging vehicle based on the discharge ready signal, and at the same time, locking the electronic locks of the charging gun head and the discharging gun head, and simulating the charging pile to start charging handshake with the second battery management system of the charging vehicle;
after the second battery management system of the charging vehicle is woken up, the second battery management system detecting a CC2 resistance; If charging vehicle is determined to have a charging demand and to be fully connected to the charging gun head according to the detected CC2 resistance, the second vehicle controller of the charging vehicle controls the discharging vehicle to complete high-voltage power-on;
after completing the charging handshake and high-voltage power-on, the second battery management system sending a maximum allowable charging capacity of the second power battery to the charging connection device according to the preset standard, and the charging connection device simulating the charging pile to send the maximum output capacity of the discharging vehicle to the second battery management system;
after the second battery management system matches the received maximum output capacity of the discharging vehicle with a state of the second battery management system, the second battery management system controlling the second fast charging relay to close and then sending a charging ready signal to the charging connection device;
the charging connection device sending a detected DC voltage of the charging terminal to the first battery management system through the CAN bus, and the first battery management system forwarding the detected DC voltage to the first vehicle controller, and the first vehicle controller adjusting the target voltage of the generator to be the detected DC voltage of the charging terminal;
when an absolute value of a voltage difference between the actual bus of the charging connection device at the discharging vehicle and the actual bus of the charging connection device at the charging vehicle is within a preset range through comparison by the charging connection device, the charging connection device controlling the charging relay to be closed, and the discharging vehicle starting to charge the charging vehicle;
during the charging process, the charging connection device sending a received charging demand to the first battery management system through the CAN bus in real time, and the first battery management system forwarding the charging demand to the first vehicle controller, so that the first vehicle controller adjusts an output current and an output voltage of the generator according to the charging demand.

## Patentansprüche

1. V2V-Gleichstromladesystem für ein Plug-in-Hybrid-Elektrofahrzeug, umfassend:
eine Ladeverbindungsvorrichtung, ein Entladefahrzeug und ein Ladefahrzeug; **dadurch gekennzeichnet, dass**
die Ladeverbindungsvorrichtung dazu ausgelegt ist, das Entladefahrzeug und das Ladefahrzeug miteinander zu verbinden und zunächst das Entladefahrzeug aufzuwecken, sodass das Entladefahrzeug eine Hochvolt-Einschaltung abschließt;
das Entladefahrzeug dazu ausgelegt ist, über CAN-Kommunikation ein Signal über das maximale Ausgangsvermögen des Entladefahrzeugs und ein Entladebereitschaftssignal an die Ladeverbindungsvorrichtung zu senden;
die Ladeverbindungsvorrichtung dazu ausgelegt ist, das Ladefahrzeug auf Grundlage des Entladebereitschaftssignals aufzuwecken, sodass das Ladefahrzeug eine Hochvolt-Einschaltung abschließt;
die Ladeverbindungsvorrichtung dazu ausgelegt ist, gemäß einer vorgegebenen Norm eine Ladesäule zu simulieren, um mit dem Ladefahrzeug einen Lade-Handshake und eine Konfiguration von Ladeparametern durchzuführen;
das Entladefahrzeug, nachdem das Ladefahrzeug bereit ist, dazu ausgelegt ist, mittels eines Verbrennungsmotors einen Generator zur Stromerzeugung anzutreiben und dadurch eine Antriebsbatterie des Ladefahrzeugs zu laden;
das Entladefahrzeug mit dem Verbrennungsmotor, dem Generator, einer ersten Fahrzeugsteuerung, einem Wechselrichter, einem Gleichstromladeanschluss A, einem ersten Batteriemanagementsystem und einer ersten Antriebsbatterie ausgestattet ist;
das Ladefahrzeug mit einer zweiten Fahrzeugsteuerung, einem Gleichstromladeanschluss B, einem zweiten Batteriemanagementsystem und einer zweiten Antriebsbatterie ausgestattet ist;
der Wechselrichter und die erste Antriebsbatterie über ein erstes Hauptrelais verbunden sind und der Gleichstromladeanschluss A über ein erstes Schnellladerelais mit dem Wechselrichter und dem ersten Hauptrelais verbunden ist;
der Gleichstromladeanschluss B über ein zweites Schnellladerelais mit einem zweiten Hauptrelais verbunden ist;
**dadurch gekennzeichnet, dass**
die Ladeverbindungsvorrichtung ferner einen Entladesteckerkopf zum Verbinden mit dem Gleichstromladeanschluss A des Entladefahrzeugs, einen Ladesteckerkopf zum Verbinden mit dem Gleichstromladeanschluss B des Ladefahrzeugs, ein Hochspannungskabel und ein Niederspannungskabel zum Verbinden des Gleichstromladeanschlusses A und des Gleichstromladeanschlusses B, ein Stromversorgungsmodul zum Bereitstellen einer Niederspannungs-Hilfsstromversorgung für das Ladefahrzeug und das Entladefahrzeug sowie ein Ladeverbindungs-Steuermodul umfasst, das dazu ausgelegt ist, einen Verbindungszustand eines Ladesteckers und eines Entladesteckers zu erfassen, Temperaturen des Ladesteckerkopfes und des Entladesteckerkopfes zu erfassen und elektronische Verriegelungen des Ladefahrzeugs und des Entladefahrzeugs zum Entriegeln oder Verriegeln anzusteuern.

2. V2V-Gleichstromladesystem für ein Plug-in-Hybrid-Elektrofahrzeug nach Anspruch 1, wobei
ein Widerstandswert eines im Entladesteckerkopf angeordneten CC2-Widerstands von einem Widerstandswert eines in der vorgegebenen Norm festgelegten CC2-Widerstands verschieden ist und ein Widerstandswert eines im Ladesteckerkopf angeordneten CC2-Widerstands gleich dem Widerstandswert des in der vorgegebenen Norm festgelegten CC2-Widerstands ist.

3. V2V-Gleichstromladesystem für ein Plug-in-Hybrid-Elektrofahrzeug nach Anspruch 2, wobei
die erste Fahrzeugsteuerung des Entladefahrzeugs, nachdem sie von der Ladeverbindungsvorrichtung aufgeweckt wurde, das erste Batteriemanagementsystem zur Erfassung des CC2-Widerstands ansteuert, und, wenn anhand des erfassten CC2-Widerstands bestimmt wird, dass für das Entladefahrzeug eine Entladeanforderung vorliegt und das Entladefahrzeug vollständig mit dem Entladesteckerkopf verbunden ist, die erste Fahrzeugsteuerung des Entladefahrzeugs das Entladefahrzeug zum Abschluss der Hochvolt-Einschaltung ansteuert;
die erste Fahrzeugsteuerung, nachdem die Hochvolt-Einschaltung des Entladefahrzeugs erfolgt ist, den Generator ansteuert, um den Verbrennungsmotor unter Nutzung der Energie der ersten Antriebsbatterie zu starten; und die erste Fahrzeugsteuerung nach dem Starten des Verbrennungsmotors den Generator unter Nutzung der mechanischen Energie des Verbrennungsmotors zur Stromerzeugung ansteuert;
wobei eine Sollspannung des Generators eine vorgegebene Spannung ist, die größer als eine Gesamtspannung der ersten Antriebsbatterie ist, und eine Sollleistung des Generators einem Niederspannungs-Leistungsbedarf des Entladefahrzeugs entspricht;
die erste Fahrzeugsteuerung, nachdem der Generator ordnungsgemäß Strom erzeugt, das mit der ersten Antriebsbatterie verbundene erste Hauptrelais zum Öffnen ansteuert; anschließend das erste Batteriemanagementsystem bestimmt, ob ein Zustand des Entladefahrzeugs eine vorgegebene Entladebedingung erfüllt, und, falls dies der Fall ist, das erste Batteriemanagementsystem das Entladebereitschaftssignal sowie ein Signal über das maximale Ausgangsvermögen des Entladefahrzeugs über einen CAN-Bus an die Ladeverbindungsvorrichtung sendet;
die Ladeverbindungsvorrichtung das Ladefahrzeug auf Grundlage des Entladebereitschaftssignals aufweckt und die Ladesäule simuliert, um mit dem Ladefahrzeug einen Lade-Handshake und eine Konfiguration von Ladeparametern durchzuführen;
die Ladeverbindungsvorrichtung eine erfasste Gleichspannung eines Ladeanschlusses über den CAN-Bus an das erste Batteriemanagementsystem sendet, das erste Batteriemanagementsystem die erfasste Gleichspannung an die erste Fahrzeugsteuerung weiterleitet und die erste Fahrzeugsteuerung die Sollspannung des Generators auf die erfasste Gleichspannung des Ladeanschlusses einstellt;
die Ladeverbindungsvorrichtung, wenn durch einen von ihr vorgenommenen Vergleich festgestellt wird, dass ein Absolutwert einer Spannungsdifferenz zwischen einer Ist-Busspannung der Ladeverbindungsvorrichtung auf Seiten des Entladefahrzeugs und einer Ist-Busspannung der Ladeverbindungsvorrichtung auf Seiten des Ladefahrzeugs innerhalb eines vorgegebenen Bereichs liegt, ein Laderelais zum Schließen ansteuert und das Entladefahrzeug mit dem Laden des Ladefahrzeugs beginnt;
die Ladeverbindungsvorrichtung während des Ladevorgangs eine empfangene Ladeanforderung in Echtzeit über den CAN-Bus an das erste Batteriemanagementsystem sendet und das erste Batteriemanagementsystem die Ladeanforderung an die erste Fahrzeugsteuerung weiterleitet, sodass die erste Fahrzeugsteuerung einen Ausgangsstrom und eine Ausgangsspannung des Generators entsprechend der Ladeanforderung einstellt.

4. V2V-Gleichstromladesystem für ein Plug-in-Hybrid-Elektrofahrzeug nach Anspruch 3, wobei
das Ladeverbindungs-Steuermodul das Ladefahrzeug auf Grundlage des Entladebereitschaftssignals aufweckt, gleichzeitig die elektronischen Verriegelungen des Ladesteckerkopfes und des Entladesteckerkopfes verriegelt und die Ladesäule simuliert, um einen Lade-Handshake mit dem zweiten Batteriemanagementsystem des Ladefahrzeugs einzuleiten;
das zweite Batteriemanagementsystem des Ladefahrzeugs nach dem Aufwecken den CC2-Widerstand erfasst; und, wenn anhand des erfassten CC2-Widerstands bestimmt wird, dass für das Ladefahrzeug eine Ladeanforderung vorliegt und das Ladefahrzeug vollständig mit dem Ladesteckerkopf verbunden ist, die zweite Fahrzeugsteuerung des Ladefahrzeugs das Entladefahrzeug zum Abschluss der Hochvolt-Einschaltung ansteuert;
das zweite Batteriemanagementsystem nach Abschluss des Lade-Handshakes und der Hochvolt-Einschaltung gemäß der vorgegebenen Norm das maximal zulässige Ladevermögen der zweiten Antriebsbatterie an die Ladeverbindungsvorrichtung sendet und die Ladeverbindungsvorrichtung die Ladesäule simuliert, um das maximale Ausgangsvermögen des Entladefahrzeugs an das zweite Batteriemanagementsystem zu senden;
das zweite Batteriemanagementsystem, nachdem es das empfangene maximale Ausgangsvermögen des Entladefahrzeugs mit seinem aktuellen Betriebszustand abgeglichen hat, das zweite Schnellladerelais zum Schließen ansteuert und anschließend ein Ladebereitschaftssignal an die Ladeverbindungsvorrichtung sendet.

5. V2V-Gleichstromladesystem für ein Plug-in-Hybrid-Elektrofahrzeug nach Anspruch 4, wobei
das erste Hauptrelais geschlossen und das erste Schnellladerelais geöffnet ist, wenn die erste Fahrzeugsteuerung das Entladefahrzeug zum Abschluss der Hochvolt-Einschaltung ansteuert;
das zweite Hauptrelais geschlossen und das zweite Schnellladerelais geöffnet ist, wenn die zweite Fahrzeugsteuerung das Ladefahrzeug zur Durchführung der Hochvolt-Einschaltung ansteuert.

6. V2V-Gleichstromladesystem für ein Plug-in-Hybrid-Elektrofahrzeug nach Anspruch 3, 4 oder 5, wobei
die erste Fahrzeugsteuerung des Entladefahrzeugs nach Eintritt in einen Gleichstromladezustand, wenn der Ladevorgang abgeschlossen ist, der Benutzer den Ladevorgang aktiv beendet oder am Ladefahrzeug oder Entladefahrzeug ein Fehler vorliegt, der eine Beendigung des Ladevorgangs erfordert, den Generator und andere Hochspannungsverbraucher des Entladefahrzeugs zum Abschalten ansteuert und anschließend, nachdem der Generator zum Stillstand gekommen ist, das erste Schnellladerelais zum Öffnen ansteuert;
das zweite Batteriemanagementsystem das zweite Schnellladerelais zum Öffnen ansteuert, nachdem das Ladefahrzeug bestimmt hat, dass ein Ladestrom unter einem vorgegebenen Wert liegt;
die Ladeverbindungsvorrichtung, nachdem sie bestätigt hat, dass das Laderelais geöffnet ist, die elektronischen Verriegelungen des Ladesteckers und des Entladesteckers zum Entriegeln ansteuert und die Bereitstellung der Niederspannungs-Hilfsstromversorgung für das Ladefahrzeug und das Entladefahrzeug beendet, woraufhin das Ladefahrzeug den Ausschaltvorgang abschließt und
das Entladefahrzeug in den Ruhezustand übergeht.

7. V2V-Gleichstromladesteuerverfahren für ein Plug-in-Hybrid-Elektrofahrzeug unter Verwendung des Systems nach Anspruch 4, umfassend:
Ansteuern des ersten Batteriemanagementsystems zur Erfassung eines CC2-Widerstands durch die erste Fahrzeugsteuerung des Entladefahrzeugs, nachdem diese durch die Ladeverbindungsvorrichtung aufgeweckt worden ist, wobei, wenn anhand des erfassten CC2-Widerstands bestimmt wird, dass für das Entladefahrzeug eine Entladeanforderung vorliegt und das Entladefahrzeug vollständig mit dem Entladesteckerkopf verbunden ist, die erste Fahrzeugsteuerung des Entladefahrzeugs das Entladefahrzeug zum Abschluss der Hochvolt-Einschaltung ansteuert;
Ansteuern des Generators durch die erste Fahrzeugsteuerung nach erfolgter Hochvolt-Einschaltung des Entladefahrzeugs, um den Verbrennungsmotor unter Nutzung der Energie einer ersten Antriebsbatterie zu starten; wobei die erste Fahrzeugsteuerung nach dem Starten des Verbrennungsmotors den Generator unter Nutzung der mechanischen Energie des Verbrennungsmotors zur Stromerzeugung ansteuert, eine Sollspannung des Generators eine vorgegebene Spannung ist, die größer als eine Gesamtspannung der ersten Antriebsbatterie ist, und eine Sollleistung des Generators einem Niederspannungs-Leistungsbedarf des Entladefahrzeugs entspricht;
Ansteuern des mit der ersten Antriebsbatterie verbundenen ersten Hauptrelais zum Öffnen durch die erste Fahrzeugsteuerung, nachdem der Generator ordnungsgemäß Strom erzeugt; anschließendes Bestimmen durch das erste Batteriemanagementsystem, ob ein Zustand des Entladefahrzeugs eine vorgegebene Entladebedingung erfüllt, wobei das erste Batteriemanagementsystem, falls dies der Fall ist, ein Entladebereitschaftssignal sowie ein Signal über das maximale Ausgangsvermögen des Entladefahrzeugs über einen CAN-Bus an die Ladeverbindungsvorrichtung sendet;
Aufwecken des Ladefahrzeugs auf Grundlage des Entladebereitschaftssignals und Simulieren der Ladesäule, jeweils durch die Ladeverbindungsvorrichtung, um mit dem Ladefahrzeug einen Lade-Handshake und eine Konfiguration von Ladeparametern durchzuführen;
Aufwecken des Ladefahrzeugs auf Grundlage des Entladebereitschaftssignals, gleichzeitiges Verriegeln der elektronischen Verriegelungen des Ladesteckerkopfes und des Entladesteckerkopfes und Simulieren der Ladesäule, jeweils durch das Ladeverbindungs-Steuermodul, um einen Lade-Handshake mit dem zweiten Batteriemanagementsystem des Ladefahrzeugs einzuleiten;
Erfassen eines CC2-Widerstands durch das zweite Batteriemanagementsystem des Ladefahrzeugs nach dessen Aufwecken; wobei, wenn anhand des erfassten CC2-Widerstands bestimmt wird, dass für das Ladefahrzeug eine Ladeanforderung vorliegt und das Ladefahrzeug vollständig mit dem Ladesteckerkopf verbunden ist, die zweite Fahrzeugsteuerung des Ladefahrzeugs das Ladefahrzeug zum Abschluss der Hochvolt-Einschaltung ansteuert;
Senden des maximal zulässigen Ladevermögens
der zweiten Antriebsbatterie gemäß der vorgegebenen Norm an die Ladeverbindungsvorrichtung durch das zweite Batteriemanagementsystem nach Abschluss des Lade-Handshakes und der Hochvolt-Einschaltung und Simulieren der Ladesäule durch die Ladeverbindungsvorrichtung, um das maximale Ausgangsvermögen des Entladefahrzeugs an das zweite Batteriemanagementsystem zu senden;
Ansteuern des zweiten Schnellladerelais zum Schließen durch das zweite Batteriemanagementsystem, nachdem dieses das empfangene maximale Ausgangsvermögen des Entladefahrzeugs mit seinem aktuellen Betriebszustand abgeglichen hat, und anschließendes Senden eines Ladebereitschaftssignals an die Ladeverbindungsvorrichtung;
Senden einer erfassten Gleichspannung des Ladeanschlusses über den CAN-Bus an das erste Batteriemanagementsystem durch die Ladeverbindungsvorrichtung, Weiterleiten der erfassten Gleichspannung an die erste Fahrzeugsteuerung durch das erste Batteriemanagementsystem und Einstellen der Sollspannung des Generators auf die erfasste Gleichspannung des Ladeanschlusses durch die erste Fahrzeugsteuerung;
Ansteuern des Laderelais zum Schließen durch die Ladeverbindungsvorrichtung, wenn durch einen von der Ladeverbindungsvorrichtung vorgenommenen Vergleich festgestellt wird, dass ein Absolutwert einer Spannungsdifferenz zwischen einer Ist-Busspannung der Ladeverbindungsvorrichtung auf Seiten des Entladefahrzeugs und einer Ist-Busspannung der Ladeverbindungsvorrichtung auf Seiten des Ladefahrzeugs innerhalb eines vorgegebenen Bereichs liegt, und Beginnen des Ladens des Ladefahrzeugs durch das Entladefahrzeug;
Übermitteln einer während des Ladevorgangs empfangenen Ladeanforderung in Echtzeit durch die Ladeverbindungsvorrichtung über den CAN-Bus an das erste Batteriemanagementsystem, Weiterleiten der Ladeanforderung durch dieses an die erste Fahrzeugsteuerung und entsprechendes Einstellen von Ausgangsstrom und Ausgangsspannung des Generators durch die erste Fahrzeugsteuerung.

## Revendications

1. Un système de charge CC V2V de véhicule électrique hybride rechargeable, comprenant : un dispositif de connexion de charge, un véhicule de décharge et un véhicule de charge ; **caractérisé en ce que**,
le dispositif de connexion de charge est configuré pour connecter le véhicule de décharge et le véhicule de charge et réveiller le véhicule de décharge en premier, de sorte que le véhicule de décharge effectue une mise sous haute tension ;
le véhicule de décharge est configuré pour envoyer un signal de capacité de sortie maximale du véhicule de décharge et un signal de prêt à décharger au dispositif de connexion de charge par communication CAN ;
le dispositif de connexion de charge est configuré pour réveiller le véhicule de charge sur la base du signal de prêt à décharger, de sorte que le véhicule de charge effectue une mise sous haute tension ;
le dispositif de connexion de charge est configuré pour simuler une borne de charge pour effectuer un établissement de liaison de charge et une configuration des paramètres de charge avec le véhicule de charge selon une norme prédéfinie ;
une fois le véhicule de charge prêt, le véhicule de décharge est configuré pour fournir de l'énergie par l'intermédiaire d'un moteur thermique pour entraîner un générateur afin de générer de l'électricité pour charger une batterie de traction du véhicule de charge ;
le véhicule de décharge est équipé du moteur thermique, du générateur, d'un premier contrôleur de véhicule, d'un onduleur, d'un port de charge CC A, d'un premier système de gestion de batterie et d'une première batterie de traction ;
le véhicule de charge est équipé d'un second contrôleur de véhicule, d'un port de charge CC B, d'un second système de gestion de batterie et d'une seconde batterie de traction ;
l'onduleur et la première batterie de traction sont connectés par l'intermédiaire d'un premier relais principal, et le port de charge CC A est connecté à l'onduleur et au premier relais principal par l'intermédiaire d'un premier relais de charge rapide ;
le port de charge CC B est connecté à un second relais principal par l'intermédiaire d'un second relais de charge rapide ;
**caractérisé en ce que**,
le dispositif de connexion de charge comprend un connecteur de décharge pour connecter le port de charge CC A du véhicule de décharge, un connecteur de charge pour connecter le port de charge CC B du véhicule de charge, un câble haute tension et un câble basse tension pour connecter le port de charge CC A et le port de charge CC B, un module d'alimentation électrique pour fournir une alimentation auxiliaire basse tension pour le véhicule de charge et le véhicule de décharge, et un module de commande de connexion de charge configuré pour détecter l'état de connexion d'un connecteur de charge et d'un connecteur de décharge, collecter les températures du connecteur de charge et du connecteur de décharge, et commander les serrures électroniques du véhicule de charge et du véhicule de décharge pour qu'elles soient déverrouillées ou verrouillées.

2. Le système de charge CC V2V de véhicule électrique hybride rechargeable selon la revendication 1, dans lequel,
une valeur de résistance d'une résistance CC2 configurée dans le connecteur de décharge est différente d'une valeur de résistance d'une résistance CC2 spécifiée dans la norme prédéfinie, et une valeur de résistance d'une résistance CC2 configurée dans le connecteur de charge est égale à la valeur de résistance de la résistance CC2 spécifiée dans la norme prédéfinie.

3. Le système de charge CC V2V de véhicule électrique hybride rechargeable selon la revendication 2, dans lequel,
après avoir été réveillé par le dispositif de connexion de charge, le premier contrôleur de véhicule du véhicule de décharge commande au premier système de gestion de batterie de détecter la résistance CC2, si le véhicule de décharge est déterminé comme ayant l'exigence de décharge et comme étant entièrement connecté au connecteur de décharge selon la résistance CC2 détectée, le premier contrôleur de véhicule du véhicule de décharge commande au véhicule de décharge d'effectuer la mise sous haute tension ;
après que le véhicule de décharge est mis sous tension à haute tension, le premier contrôleur de véhicule commande le générateur pour entraîner le moteur thermique à démarrer par l'énergie de la première batterie de traction ; après le démarrage du moteur thermique, le premier contrôleur de véhicule commande au générateur d'utiliser l'énergie du moteur thermique pour générer de l'électricité, une tension cible du générateur est une tension prédéfinie supérieure à une tension totale de la première batterie de traction, et une puissance cible du générateur est une puissance consommée basse tension du véhicule de décharge ;
une fois que le générateur génère normalement de l'énergie, le premier contrôleur de véhicule commande au premier relais principal connecté à la première batterie de traction de se déconnecter ; ensuite le premier système de gestion de batterie détermine si un état du véhicule de décharge satisfait à une condition de décharge prédéfinie, et si tel est le cas, le premier système de gestion de batterie envoie le signal de prêt à décharger et envoie le signal de capacité de sortie maximale du véhicule de décharge au dispositif de connexion de charge via un bus CAN ;
le dispositif de connexion de charge réveille le véhicule de charge sur la base du signal de prêt à décharger, et simule la borne de charge pour effectuer un établissement de liaison de charge et une configuration des paramètres de charge avec le véhicule de charge ;
le dispositif de connexion de charge envoie une tension CC détectée d'un terminal de charge au premier système de gestion de batterie via le bus CAN, et le premier système de gestion de batterie transmet la tension CC détectée au premier contrôleur de véhicule, et le premier contrôleur de véhicule ajuste la tension cible du générateur pour être la tension CC détectée du terminal de charge ;
lorsqu'une valeur absolue d'une différence de tension entre une tension de bus réelle du dispositif de connexion de charge au niveau du véhicule de décharge et une tension de bus réelle du dispositif de connexion de charge au niveau du véhicule de charge se situe dans une plage prédéfinie suite à une comparaison effectuée par le dispositif de connexion de charge, le dispositif de connexion de charge commande la fermeture d'un relais de charge, et le véhicule de décharge commence à charger le véhicule de charge ;
pendant le processus de charge, le dispositif de connexion de charge envoie une demande de charge reçue au premier système de gestion de batterie via le bus CAN en temps réel, et le premier système de gestion de batterie transmet la demande de charge au premier contrôleur de véhicule, de sorte que le premier contrôleur de véhicule ajuste un courant de sortie et une tension de sortie du générateur en fonction de la demande de charge.

4. Le système de charge CC V2V de véhicule électrique hybride rechargeable selon la revendication 3, dans lequel,
le dispositif de commande de connexion de charge réveille le véhicule de charge sur la base du signal de prêt à décharger, et en même temps, verrouille les serrures électroniques du connecteur de charge et du connecteur de décharge, et simule la borne de charge pour commencer un établissement de liaison de charge avec le second système de gestion de batterie du véhicule de charge ;
une fois le second système de gestion de batterie du véhicule de charge réveillé, le second système de gestion de batterie détecte la résistance CC2 ; s'il est déterminé que le véhicule de charge a une demande de charge et est entièrement connecté au connecteur de charge selon la résistance CC2 détectée, le second contrôleur de véhicule du véhicule de charge commande au véhicule de décharge d'effectuer la mise sous haute tension ;
après avoir effectué l'établissement de liaison de charge et la mise sous haute tension, le second système de gestion de batterie envoie une capacité de charge autorisée maximale de la seconde batterie de traction au dispositif de connexion de charge selon la norme prédéfinie, et le dispositif de connexion de charge simule la borne de charge pour envoyer la capacité de sortie maximale du véhicule de décharge au second système de gestion de batterie ;
après que le second système de gestion de batterie fait correspondre la capacité de sortie maximale reçue du véhicule de décharge avec un état du second système de gestion de batterie, le second système de gestion de batterie commande la fermeture du second relais de charge rapide et envoie ensuite un signal de prêt à charger au dispositif de connexion de charge.

5. Le système de charge CC V2V de véhicule électrique hybride rechargeable selon la revendication 4, dans lequel,
lorsque le premier contrôleur de véhicule commande au véhicule de décharge d'effectuer la mise sous haute tension, le premier relais principal est fermé et le premier relais de charge rapide est déconnecté ;
lorsque le second contrôleur de véhicule commande au véhicule de charge d'effectuer une mise sous haute tension, le second relais principal est fermé et le second relais de charge rapide est déconnecté.

6. Le système de charge CC V2V de véhicule électrique hybride rechargeable selon la revendication 3, 4 ou 5, dans lequel,
après être entré dans un état de charge CC, si la charge est terminée, que l'utilisateur met activement fin à la charge, ou que le véhicule de charge ou le véhicule de décharge présente un défaut qui nécessite une fin de charge, le premier contrôleur de véhicule du véhicule de décharge commande l'arrêt du générateur et d'autres charges haute tension du véhicule de décharge, et commande ensuite au premier relais de charge rapide de se déconnecter après l'arrêt du générateur ;
après que le véhicule de charge a déterminé qu'un courant de charge est inférieur à une valeur prédéfinie, le second système de gestion de batterie commande au second relais de charge rapide de se déconnecter ;
une fois que le dispositif de connexion de charge a confirmé que le relais de charge est déconnecté, le dispositif de connexion de charge commande le déverrouillage des serrures électroniques du connecteur de charge et du connecteur de décharge, et cesse de fournir l'alimentation auxiliaire basse tension au véhicule de charge et au véhicule de décharge, et le véhicule de charge et le véhicule de décharge effectuent respectivement la mise hors tension et la mise en veille.

7. Procédé de commande de charge CC V2V de véhicule électrique hybride rechargeable selon le système de la revendication 4, **caractérisé en ce qu'**il comprend :
le premier contrôleur de véhicule du véhicule de décharge, après avoir été réveillé par le dispositif de connexion de charge, commande au premier système de gestion de batterie de détecter une résistance CC2, si la résistance CC2 détectée détermine que le véhicule de décharge a une demande de décharge et est entièrement connecté au connecteur de décharge, le premier contrôleur de véhicule du véhicule de décharge commande au véhicule de décharge d'effectuer une mise sous haute tension ;
le premier contrôleur de véhicule, après que le véhicule de décharge est mis sous tension à haute tension, commande le générateur pour entraîner le moteur thermique à démarrer grâce à une énergie d'une première batterie de traction ; après le démarrage du moteur thermique, le premier contrôleur de véhicule commande le générateur pour utiliser l'énergie du moteur thermique pour générer de l'électricité, et une tension cible du générateur est une tension prédéfinie supérieure à une tension totale de la première batterie de traction, et une puissance cible du générateur est une puissance consommée basse tension du véhicule de décharge ;
une fois que le générateur génère normalement de l'énergie, le premier contrôleur de véhicule commande la déconnexion du premier relais principal connecté à la première batterie de traction ; ensuite le premier système de gestion de batterie détermine si un état du véhicule de décharge satisfait à une condition de décharge prédéfinie, et si tel est le cas, le premier système de gestion de batterie envoie un signal de prêt à décharger et envoie un signal de capacité de sortie maximale du véhicule de décharge au dispositif de connexion de charge via un bus CAN ;
le dispositif de connexion de charge réveille le véhicule de charge sur la base du signal de prêt à décharger, et simule la borne de charge pour effectuer un établissement de liaison de charge et une configuration des paramètres de charge avec le véhicule de charge ;
le dispositif de commande de connexion de charge réveille le véhicule de charge sur la base du signal de prêt à décharger, et en même temps, verrouille les serrures électroniques du connecteur de charge et du connecteur de décharge, et simule la borne de charge pour commencer un établissement de liaison de charge avec le second système de gestion de batterie du véhicule de charge ;
après que le second système de gestion de batterie du véhicule de charge est réveillé, le second système de gestion de batterie détecte une résistance CC2 ; s'il est déterminé que le véhicule de charge a une demande de charge et est entièrement connecté au connecteur de charge selon la résistance CC2 détectée, le second contrôleur de véhicule du véhicule de charge commande au véhicule de décharge d'effectuer la mise sous haute tension ;
après avoir effectué l'établissement de liaison de charge et la mise sous haute tension, le second système de gestion de batterie envoie une capacité de charge maximale autorisée de la seconde batterie de traction au dispositif de connexion de charge selon la norme prédéfinie, et le dispositif de connexion de charge simule la borne de charge pour envoyer la capacité de sortie maximale du véhicule de décharge au second système de gestion de batterie ;
après que le second système de gestion de batterie fait correspondre la capacité de sortie maximale reçue du véhicule de décharge avec un état du second système de gestion de batterie, le second système de gestion de batterie commande la fermeture du second relais de charge rapide et envoie ensuite un signal de prêt à charger au dispositif de connexion de charge ;
le dispositif de connexion de charge envoie une tension CC détectée du terminal de charge au premier système de gestion de batterie via le bus CAN, et le premier système de gestion de batterie transmet la tension CC détectée au premier contrôleur de véhicule, et le premier contrôleur de véhicule ajuste la tension cible du générateur pour être la tension CC détectée du terminal de charge ;
lorsqu'une valeur absolue d'une différence de tension entre la tension de bus réelle du dispositif de connexion de charge au niveau du véhicule de décharge et la tension de bus réelle du dispositif de connexion de charge au niveau du véhicule de charge se situe dans une plage prédéfinie suite à une comparaison effectuée par le dispositif de connexion de charge, le dispositif de connexion de charge commande la fermeture du relais de charge, et le véhicule de décharge commence à charger le véhicule de charge ;
pendant le processus de charge, le dispositif de connexion de charge envoie une demande de charge reçue au premier système de gestion de batterie via le bus CAN en temps réel, et le premier système de gestion de batterie transmet la demande de charge au premier contrôleur de véhicule, de sorte que le premier contrôleur de véhicule ajuste un courant de sortie et une tension de sortie du générateur en fonction de la demande de charge.
